# EUROPÄISCHE PATENTSCHRIFT

(11) **EP 0 563 870 B1**
(45) Veröffentlichungstag und Bekanntmachung des Hinweises auf die Patenterteilung: **09.12.1998**
(21) Anmeldenummer: 93105204.7
(22) Anmeldetag: 30.03.1993
(51) Int. Cl.: F16B 35/00, F16B 37/08, F16B 35/06

(54) **Schnellbefestigungsvorrichtung**
Quick acting fixing device
Dispositif de fixation rapide

(30) Priorität: 01.04.1992 DE 4210682
(43) Veröffentlichungstag der Anmeldung: 06.10.1993
(73) Patentinhaber: SCHWAB SANITäR-PLASTIC GmbH, D-72793 Pfullingen (DE)
(72) Erfinder: Klimek, Ernst, D-7418 Engstingen-Kohlstetten (DE)
(74) Vertreter: KOHLER SCHMID + PARTNER

(56) Entgegenhaltungen:
- DE-A- 2 316 567
- DE-A- 3 236 088
- DE-U- 7 146 313
- GB-A- 1 579 730
- US-A- 2 807 854

## Beschreibung

Die Erfindung betrifft eine Schnellbefestigungsvorrichtung, insbesondere für Sanitärausstattungsgegenstände, mit einem länglichen, einenends einen Distanzbolzen und anderenends einen Verschlußelementkopf aufweisenden Verschlußelement, mit einer Arretiervorrichtung, wobei die Arretiervorrichtung zusätzlich zu dem Distanzbolzen ein Halteelement mit einer Öffnung zur Aufnahme des Distanzbolzens aufweist, mit einer Anzahl von an der Oberfläche des Distanzbolzens angeformten Eingriffszähnen, wobei die Eingriffszähne über den Umfang des Distanzbolzens in zwei gegenüberliegenden Zahnabschnitten angeordnet sind, mit in der Öffnung angeordneten, den Eingriffszähnen in Lage, Form und Größe entsprechenden Gegenzähnen, sowie mit einem zumindest an einer Stelle in radialer Richtung deutlich über den Distanzbolzen hinausragenden Verschlußelementkopf.

Eine derartige Schnellbefestigungsvorrichtung ist durch die US-A 2,807,854 bekanntgeworden.

Die Befestigung einer Haube, Abdeckplatte etc. an einem Gehäuse bzw. an einer Vorrichtung, die nur eines gelegentlichen Zugriffes bedarf, z. B. zur Wartung oder Reparatur, erfolgt üblicherweise durch Schrauben. Dadurch kann der Abstand zwischen den zu befestigenden Teilen in gewissen Grenzen beliebig sein, da über ein entsprechend langes Gewinde der Schrauben kleinere Distanzen überbrückt werden können. Durch entsprechendes Anziehen der Schrauben kann eine ausreichende Vorspannung erzeugt werden, so daß die Schraube sich aufgrund des vorhandenen Kraftschlusses nicht unbeabsichtigt löst und gleichzeitig die zu befestigenden Teile fest zusammenhält.

Beispielhaft soll an dieser Stelle erwähnt werden, daß derartige Befestigungen bei Sanitärinstallationen verwendet werden, insbesondere bei Unterputz-Wasserspülkästen. Nachdem der Wasserspülkasten in die Wand eingebaut wurde, wird die Wand verputzt und/oder gefliest. Solche Wasserspülkasten hat über dem Wasserspiegel eine Revisionsöffnung, die sowohl die Fertigmontage als auch künftige Wartungs- oder Reparaturarbeiten erleichtern soll. Diese Revisionsöffnung wird nun mit einer jederzeit wieder abnehmbaren Revisionsplatte verschlossen, die gleichzeitig über eine Drückertaste zur Betätigung des Wasserablaufes verfügt. Diese Revisionsplatte wird mittels einer Schnappverbindung an einem Befestigungsrahmen montiert, welcher wiederum mit handelsüblichen Schrauben am Wasserspülkasten befestigt ist. Die Schnappverbindung ermöglicht eine einfache und schnelle Demontage der Revisionsplatte und da von außen keinerlei Befestigungsmittel an der Revisionsplatte befestigt zu werden brauchen, kann diese formschön und einheitlich ohne störende Schraubköpfe etc. gestaltet werden. Der Befestigungsrahmen, auf den die Revisionsplatte montiert wird, wird mit Schrauben fest aber lösbar am Wasserspülkasten befestigt. Die dazu notwendigen Schrauben werden mit dem Wasserspülkasten und anderen Einzelteilen dem Kunden geliefert. Da man aber von vorneherein nicht weiß, wie dick der Putz bzw. die Fliesen sind, werden in jedem Falle relativ lange Schrauben geliefert, damit auch größere Abstände zwischen dem Befestigungsrahmen und dem Wasserspülkasten überbrückt werden können. Dies wiederum hat den Nachteil, daß bei der Fertigmontage und bei jeder Revisionsdemontage die Schrauben sehr umständlich mit ihrem mehr oder weniger langen Gewinde in der Halterung verschraubt werden müssen. Analoges gilt auch für die Betätigungsbolzen, die eine Verbindung zwischen den Drückertasten und der Betätigungsmechanik herstellen. Eine derart langwierige und schwierige Montage bzw. Demontage stellt, insbesondere bei den heutigen Lohnkosten, einen erheblichen Nachteil dieses Standes der Technik dar.

Bei der aus der eingangs genannten US-A 2,807,854 bekannten Schnellbefestigungsvorrichtung sind an einem Schraubenbolzen zwei Muttern mit Verzahnungen und eine Zahnscheibe mit Verzahnung vorgesehen, wobei bei einer Drehbewegung der Zahnscheibe relativ zu der einen (ersten) Mutter die Verzahnung aneinandergleiten. Dadurch entfernt sich die Zahnscheibe von der ersten Mutter und nähert wieder an diese an. Bei diesem Vorgang werden jeweils eine untere und eine obere Feder abwechselnd etwas komprimiert und dekomprimiert. Der Schraubenbolzen kann sich, weil mit gleichzeitiger Komprimierung der unteren Feder die beiden Muttern etwas nach oben bewegt werden, insgesamt ebenfalls etwas nach oben und anschließend etwas nach unten bewegen. Die Anordnung der beiden Muttern und der Zahnscheibe erzeugt daher keine Spannkraft, die über die mittels Eingriffs eines Schraubenbolzens in eine Schraubenmutter erzeugte Spannkraft hinausgeht.

Davon ausgehend liegt der Erfindung die Aufgabe zugrunde, bei einer Schnellbefestigungsvorrichtung der eingangs genannten Art eine Spannkraft zu erzeugen, auch wenn die Eingriffs zähne am Distanzbolzen keine Steigung aufweisen.

Diese Aufgabe wird gelöste durch eine am Verschlußelementkopf angeordnete Spannvorrichtung.

Eine nach dieser technischen Lehre ausgebildete Schnellbefestigung hat den Vorteil, daß nachdem der Distanzbolzen des Verschlußelementes durch den Befestigungsrahmen hindurchgeführt wurde, der Distanzbolzen in das Halteelement hineinreicht und durch eine Drehung um die Längsachse des Verschlußelements zwischen 20° und 160° die an der Oberfläche des Distanzbolzens angeformten Eingriffszähne in die entsprechenden Gegenzähne in der Öffnung des Halteelementes eingreifen. Während des Drehvorganges stellt sich durch die Spannvorrichtung eine Vorspannung am Verschlußelement ein, die ein selbständiges Lösen der Schnellbefestigung verhindert. Der Eingriff der Eingriffszähne in die entsprechenden Gegenzähne erfolgt ähnlich wie bei einem Bajonettverschluß, nur daß hier im Gegensatz zu dem Bajonettverschluß erfindungsgemäß eine Mehrzahl von Eingriffszähnen gleichzeitig in die entsprechenden Gegenzähne eingreift.

Mit dieser erfindungsgemäßen Schnellbefestigung ist es möglich das Verschlußelement entsprechend dem Abstand des Befestigungsrahmens vom Halteelement mit einem Handgriff in das Halteelement hineinzuschieben, und durch eine Drehung des Verschlußelementes zwischen 20° und 160° zu spannen und zu verriegeln. Ein lästiges und langwieriges Festschrauben und Einstellen entfällt somit. Das Verspannen des Verschlußelementes durch die Spannvorrichtung gewährleistet eine sichere und dauerhafte Befestigung.

Eine Spannvorrichtung mit einem am Verschlußelementkopf angeordneten Auflager und einem am Befestigungsrahmen angeordneten Gegenlager, bei der sowohl in dem Auflager als auch in dem Gegenlager mindestens jeweils zwei Spannzähne ausgebildet sind, hat den Vorteil, daß sich das Verschlußelement noch in einfacher Weise um seine Längsachse drehen läßt, und gleichzeitig die gegenläufig angeordneten Spannzähne des Auf- und des Gegenlagers eventuell noch vorhandenes Spiel ausgleichen und bei weiterem Drehen das Verschlußelement gegen die Arretiervorrichtung verspannen.

Die Ausgestaltung eines Spannzahnes mit einer kurzen Steilflanke, die nahezu axial verläuft, und einer langen Flachflanke mit einer Steigung zwischen 7% und 35% hat den Vorteil, daß beide Lager eine sägezahnähnliche Struktur aufweisen, wobei das Verschlußelement mit den Flachflanken der Spannzähne seines Auflagers auf den Flachflanken der Spannzähne des Gegenlagers aufliegt. Dabei ist es vorteilhaft, die Steigung des Auflagers und die Steigung des Gegenlagers gleich zu gestalten, damit die Flachflanken der Spannzähne des Auflagers und des Gegenlagers parallel angeordnet sind und sich somit eine große Auflagefläche des Verschlußelementes auf dem Gegenlager ergibt.

In einer weiteren Ausgestaltung der erfindungsgemäßen Schnellbefestigung sind die Steigungen der Flachflanken der Spannzähne des Auflagers und der Spannzähne des Gegenlagers verschieden groß.

Das Anformen von mehreren Rastvorsprüngen auf jeder der langen Flachflanken der Spannzähne hat den Vorteil, daß die Spannvorrichtung beim Verdrehen des Verschlußelementes in die Vorsprünge einrastet und somit eine sichere und dauerhafte Befestigung erzielt wird, die sich nicht unbeabsichtigt wieder lösen kann, weil die Spannvorrichtung nur unter erhöhtem Kraftaufwand wieder ausgerastet werden kann.

Weil der Distanzbolzen im Querschnitt punktsymmetrisch mit zwei sich gegenüberliegenden Zahnabschnitten und zwischen den Zahnabschnitten angeordneten Freiräumen ausgestaltet ist, kann der Distanzbolzen in zwei verschiedenen, sich nicht unterscheidenden Positionen in das Halteelement eingeführt werden und eine Drehung um die Längsachse des Verschlußelementes um 90° bringt die Eingriffszähne mit den Gegenzähnen voll in Eingriff. Um eine ordnungsgemäße Arretierung zu erreichen genügt es, wenn das Verschlußelement um mindestens 20°, höchstens aber um 160° verdreht wird. Wird das Verschlußelement um 180° gedreht, so ist die Arretierung wieder gelöst, und das Verschlußelement kann aus der Halterung herausgezogen werden.

Beim Verdrehen des Verschlußelementes bewirkt die Spannvorrichtung, bedingt durch die Steigung der Spannzähne des Auflagers und des Gegenlagers, daß der frei verfügbare Raum zwischen dem Halteelement und dem Verschlußelementkopf umso kleiner wird, je weiter die Drehung fortschreitet. Dabei kann die Spannvorrichtung in die auf den Flachflanken vorgesehenen Rastvorsprüngen einrasten und gewährleistet somit eine sichere und dauerhafte Befestigung.

Für eine erfindungsgemäße Schnellbefestigung ist es ausreichend im Auflager und im Gegenlager jeweils zwei Spannzähne vorzusehen. In einer bevorzugten Ausführungsform jedoch werden im Auflager und im Gegenlager je drei gleichmäßig über dem Umfang angeordnete Spannzähne verwendet. Dies hat den Vorteil, daß eine größere Auflagefläche geschaffen wird, die auf drei verschiedene Stellen des Umfangs aufgeteilt ist und zusätzlich eine erhöhte Kippsicherheit gewährleistet.

Die Ausgestaltung des Verschlußelementkopfes mit einem gegenüber dem Distanzbolzen deutlich größeren Außendurchmesser hat den Vorteil, daß hierdurch ebenfalls die Auflagefläche des Verschlußelementes erhöht wird und somit die Kippsicherheit noch weiter gesteigert werden kann.

Um ein einfaches und unproblematisches Einführen des Distanzbolzens in die Öffnung des Halteelementes zu gewährleisten, haben die Zahnabschnitte auf der Oberfläche des Distanzbolzens eine geringfügig kleinere Umfangslänge, als die auf der Oberfläche des Distanzbolzens zwischen den Zahnabschnitten angeordneten Freiräume.

Die auf dem Distanzbolzen angeformten Eingriffszähne können wahlweise mit oder ohne Steigung ausgeführt werden. Aus fertigungstechnischen Gründen und zur Unterstützung des Vorspanneffektes der Spannvorrichtung ist es jedoch vorteilhaft, die Eingriffszähne mit einer gewindeähnlichen Steigung zu versehen.

Weitere Einzelheiten und Vorteile des Gegenstandes der Erfindung ergeben sich aus der nachfolgenden Beschreibung und der zugehörigen Zeichnung, in denen zwei bevorzugte Ausführungsbeispiele der Erfindung schematisch dargestellt worden sind. Die der Beschreibung, der Zeichnung und den Ansprüchen zu entnehmenden Merkmale können bei anderen Ausführungsformen der Erfindung in beliebiger Kombination verwirklicht sein. In den Zeichnungen zeigen:
- Fig. 1: eine perspektivische Explosionsdarstellung eines Unterputz-Wasserspülkastens mit der erfindungsgemäßen Schnellbefestigung;
- Fig. 2a: ein erfindungsgemäßes Verschlußelement in Seitenansicht;
- Fig. 2b: das Verschlußelement aus Fig. 2a in Untenansicht;
- Fig. 2c: eine Abwicklung eines Spannzahnes eines am Verschlußelement angeordneten Auflagers einer erfindungsgemäßen Spannvorrichtung;

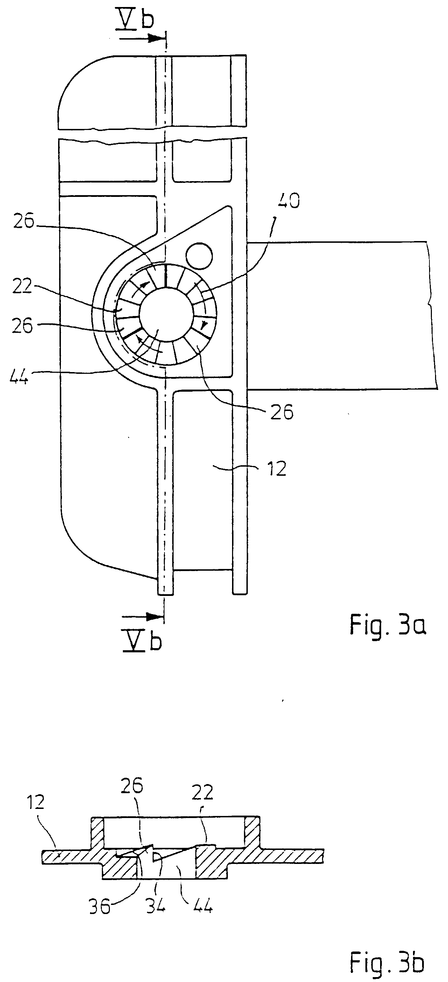

- Fig. 3a: ein im Befestigungsrahmen angeordnetes Gegenlager einer erfindungsgemäßen Spannvorrichtung in Draufsicht;
- Fig. 3b: das Gegenlager der Spannvorrichtung aus Fig. 3a in geschnittener Seitenansicht;

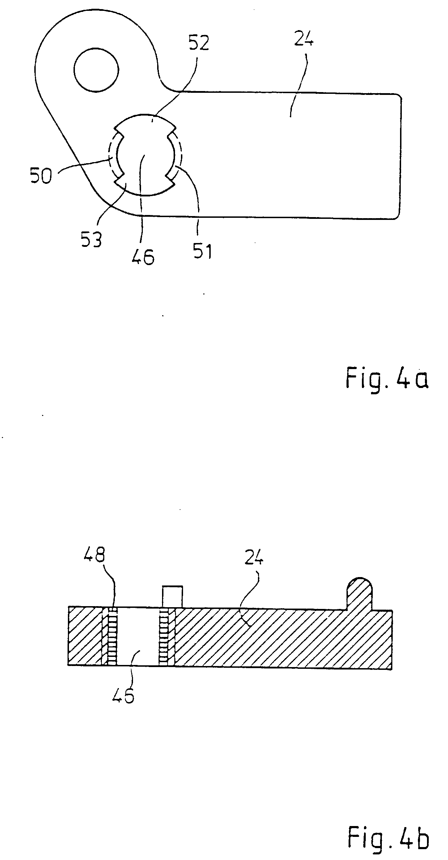

- Fig. 4a: ein Halteelement einer erfindungsgemäßen Arretiervorrichtung zur Aufnahme des Distanzbolzens in Draufsicht;
- Fig. 4b: das Halteelement aus Fig. 4a in geschnittener Seitenansicht;
- Fig. 5a: eine Ausführungsform einer erfindungsgemäßen Schnellbefestigung bei der Montage; und
- Fig. 5b: die Schnellbefestigung aus Fig. 5a im montierten Zustand, geschnitten entlang der Linie Vb - Vb aus Fig. 3a.

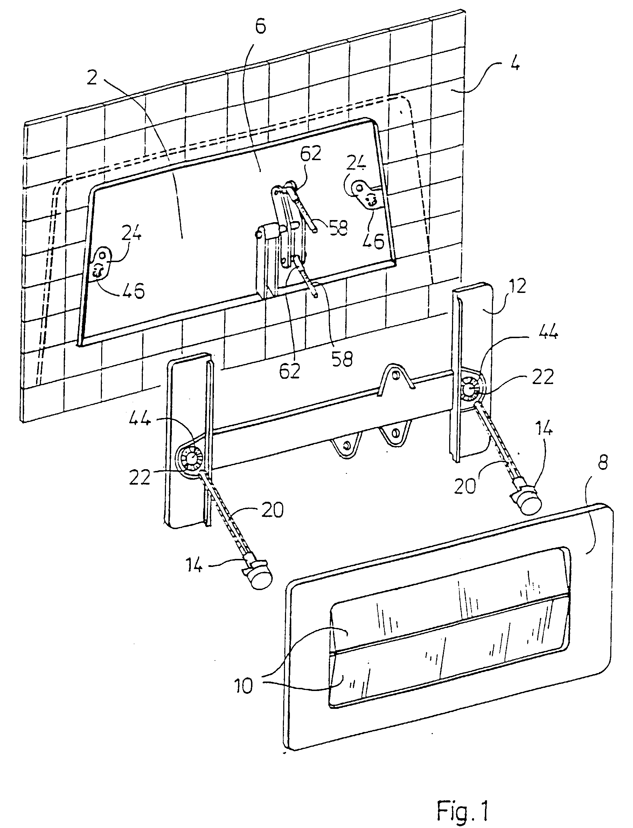

Fig. 1 zeigt beispielhaft ein Anwendungsgebiet einer erfindungsgemäßen Schnellbefestigung:

Die Befestigung einer Revisionsplatte bei einem Unterputz-Wasserspülkasten.

Beim Einbau eines Unterputz-Wasserspülkastens 2 wird zunächst der Wasserspülkasten 2 in die Wand eingelassen und der Spülkasten 2 anschließend mit einer ebenen Schicht Putz und/oder in einer Ebene liegenden Fliesen 4 überdeckt. Als einziges bleibt eine oberhalb des Wasserspiegels liegende Revisionsöffnung 6 frei um die Endmontage der Wasserspülung zu erleichtern und um später einmal notwendig werdende Wartungs und/oder Reparaturarbeiten durchführen zu können. Die Revisionsöffnung 6 wird durch eine formschöne Revisionsplatte 8 abgedeckt, in der die erforderlichen Drückertasten 10 integriert sind. Die Revisionsplatte 8 wird mit einer bestimmten Haltemechanik an einen Befestigungsrahmen 12 angebracht, nachdem dieser unter Anwendung der erfindungsgemäßen Schnellbefestigung am Unterputz-Wasserspülkasten 2 so montiert wurde, daß der Befestigungsrahmen sich an der Oberfläche einiger Fliesen 4 abstützt.

Die erfindungsgemäße Schnellbefestigung umfaßt ein Verschlußelement 14 mit einem an einem Verschlußelementkopf 16 angeformten Auflager 18 und einem Distanzbolzen 20 (siehe Fig.en 2a bis 2c), ein an dem Befestigungsrahmen 12 angeformtes Gegenlager 22 (siehe Fig.en 3a und 3b) und ein Halteelement 24 (siehe Fig.en 4a und 4b) zur Aufnahme des Distanzbolzens 20.

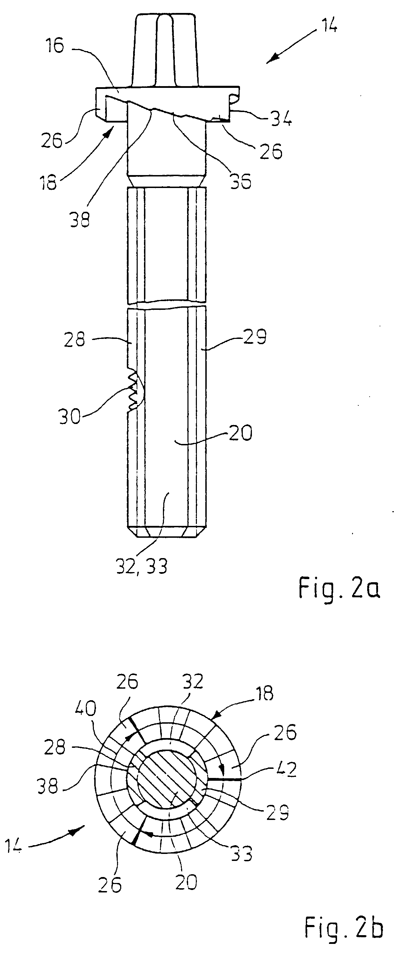

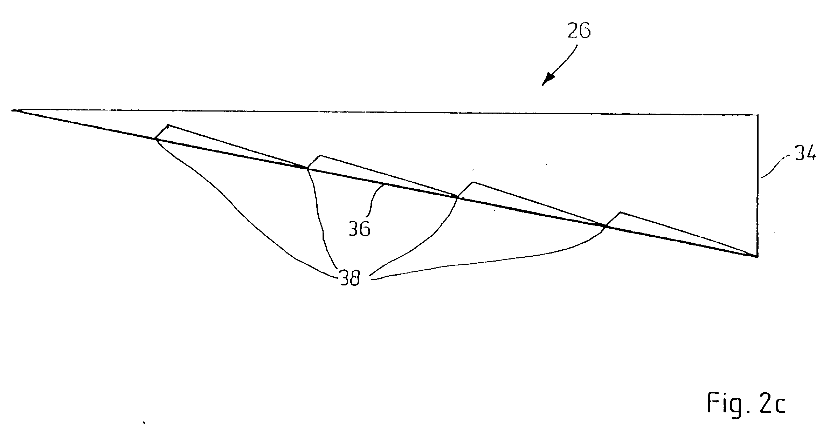

Das längliche, schraubenförmig aussehende Verschlußelement 14 ist einenends mit dem Distanzbolzen 20 und anderenends mit dem Verschlußelementkopf 16 ausgestattet, an dessen Unterseite ein Auflager 18 mit drei Spannzähnen 26 angeformt ist. An die Oberfläche des Distanzbolzens 20 sind, in zwei sich gegenüberliegenden Abschnitten 28, 29 gewindeähnliche Eingriffszähne 30 angeformt. Die Eingriffszähne 30 verfügen über eine gewindeähnliche Steigung. Es handelt sich hierbei jedoch nicht um ein Gewinde, da zwischen den Abschnitten 28, 29 Freiräume 32, 33 angeordnet sind. Der Verschlußelementkopf 16 hat einen deutlich größeren Außendurchmesser als der Gewindebolzen 20. An die Unterseite des Verschlußelementkopfes 16 sind drei das Auflager 18 bildende Spannzähne 26 angeformt, wobei jeder Spannzahn 26 aus einer kurzen Steilflanke 34 und einer langen Flachflanke 36 gebildet wird. Die Steilflanke 34 ist ungefähr axial ausgerichtet, wohingegen die Flachflanke 36 gegenüber einer Ebene quer zur Längsachse des Verschlußelementes 14 einen Winkel von ca. 10° einschließt. Auf jeder Flachflanke 36 sind vier Rastvorsprünge 38 angeordnet. In Fig. 2b wird die Steigrichtung der Spannzähne 26 des Auflagers 18 durch einen Pfeil 40 angezeigt. Eine dicke Linie 42 zeigt den jeweils höchsten Punkt eines jeden Spannzahnes 26 an. Eine Abwicklung eines Spannzahnes 26 ist in Fig. 2c dargestellt.

An einer Durchgangsöffnung 44 des Befestigungsrahmens 12, durch die der Distanzbolzen 20 hindurchgesteckt wird, ist das Gegenlager 22 angeordnet. Das Gegenlager 22 besteht wie das Auflager 18 aus drei Spannzähnen 26, die in in Pfeilrichtung 40 steigender Richtung angeordnet sind, wie die Fig.en 3a und 3b zeigen.

Das Halteelement 24 verfügt über eine Öffnung 46 zur Aufnahme des Distanzbolzens 20. In dieser Öffnung 46 sind den Eingriffszähnen 30 entsprechende Gegenzähne 48 angeordnet, die in Lage, Form und Größe den Eingriffszähnen 30 entsprechen. Die Gegenzähne 48 erstrecken sich nur über zwei sich gegenüberliegende Abschnitte 50, 51 deren Umfangslänge den Abschnitten 28, 29 entspricht. Zwischen den Abschnitten 50, 51 sind Aussparungen 50, 53 angeordnet, deren Umfangslänge geringfügig größer ist als die Umfangslänge der Abschnitte 28, 29, damit der Distanzbolzen 20 problemlos und mit ein wenig Spiel in die Öffnung 46 eingeführt werden kann (siehe Fig.en 4a und 4b).

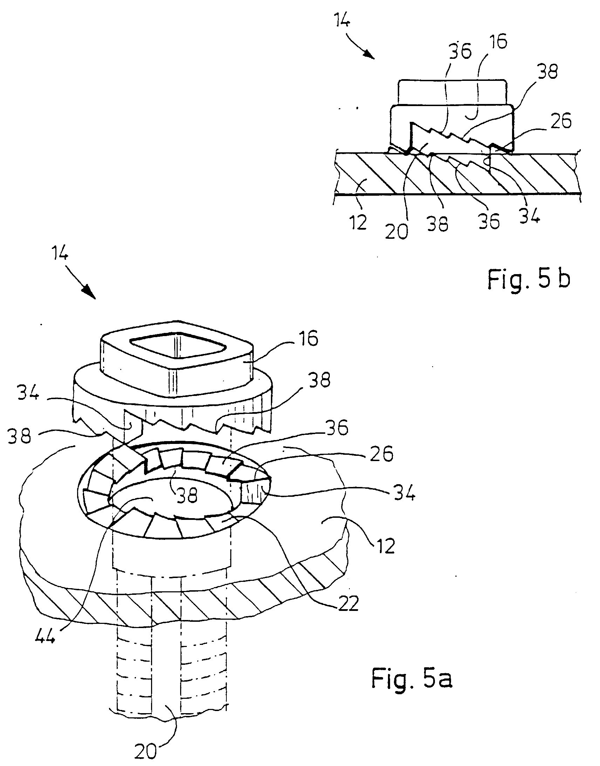

Die Figuren 5a und 5b zeigen den Montagevorgang einer Spannvorrichtung einer erfindungsgemäßen Schnellbefestigung. Dabei greifen die analog ausgestalteten Flachflanken 36 des Auflagers 18 und des Gegenlagers 22 ineinander und gewährleisten eine sichere und dauerhafte Befestigung.

Zur Befestigung wird das Verschlußelement 14 durch die Durchgangsöffnung 44 des Befestigungsrahmens 12 hindurchgesteckt, so daß der Distanzbolzen 20 bis in die Öffnung 46 des Halteelementes 24 hineinreicht und gleichzeitig das Auflager 18 am Verschlußelementkopf 16 auf dem Gegenlager 22 am Befestigungsrahmen 12 aufliegt. Nachdem nun sämtliche involvierten Teile mit der Hand bündig angedrückt sind, wobei sich der Befestigungsrahmen an den Fliesen abstützt, wird das Verschlußelement um seine Längsachse gedreht, so daß die am Distanzbolzen 20 befindlichen Eingriffszähne 30 in entsprechende Gegenzähne 48 des Halteelementes 24 eingreifen, analog zu dem Prinzip eines Bajonettverschlusses. Während des Verdrehens des Verschlußelementes 14 bewegen sich die Flachflanken 36 der Spannzähne 26 des Auflagers 18 und des Gegenlagers 22 relativ zueinander. Die Steigungen dieser Spannzähne sind dabei so angeordnet, daß beide Spannzähne beim Verdrehen eine positive Steigung aufweisen. Üblicherweise wird das Verschlußelement 14 so weit gedreht, daß das Auflager 18 und das Gegenlager 22 in eine der Rastvorsprünge 38 einrastet und somit eine sichere und dauerhafte Befestigung gewährleistet ist. Die Steigung der Flachflanken 36 bewirken, daß das Verschlußelement 14 vorgespannt wird, so daß sämtliche involvierten Teile fest und spielfrei befestigt werden. Wird das Verschlußelement 14 bereits um ca. 20° verdreht, so greifen die Eingriffszähne bereits ausreichend in die Gegenzähne ein um eine ordnungsgemäße Befestigung herzustellen. Allerdings sollte das Verschlußelement 14 nicht mehr als 160° verdreht werden, weil dann die Eingriffszähne 30 wieder aus den Gegenzähnen 48 heraustreten und bei einer Drehung von 180° ist die Arretierung wieder völlig aufgelöst, so daß nun das Verschlußelement 14 aus dem Halteelement 24 herausgezogen werden kann.

## Patentansprüche

1. Schnellbefestigungsvorrichtung, insbesondere für Sanitärausstattungsgegenstände, mit einem länglichen, einenends einen Distanzbolzen (20) und anderenends einen Verschlußelementkopf (16) aufweisenden Verschlußelement (14), mit einer Arretiervorrichtung, wobei die Arretiervorrichtung zusätzlich zu dem Distanzbolzen (20) ein Halteelement (24) mit einer Offnung (46) zur Aufnahme des Distanzbolzens (20) aufweist, mit einer Anzahl von an der Oberfläche des Distanzbolzens (20) angeformten Eingriffszähnen (30), wobei die Eingriffszähne (30) über den Umfang des Distanzbolzens (20) in zwei gegenüberliegenden Zahnabschnitten (28, 29) angeordnet sind, mit in der Öffnung (46) angeordneten, den Eingriffszähnen (30) in Lage, Form und Größe entsprechenden Gegenzähnen (48), sowie mit einem zumindest an einer Stelle in radialer Richtung deutlich über den Distanzbolzen (20) hinausragenden Verschlußelementkopf (16),
gekennzeichnet durch eine am Verschlußelementkopf (16) angeordnete Spannvorrichtung.

2. Schnellbefestigungsvorrichtung nach Anspruch 1, dadurch gekennzeichnet, daß die Spannvorrichtung ein Auflager (18) und ein Gegenlager (22) aufweist, wobei sowohl in dem Auflager (18) als auch in dem Gegenlager (22) mindestens jeweils zwei Spannzähne (26) ausgebildet sind.

3. Schnellbefestigungsvorrichtung nach einem der Ansprüche 1 oder 2, dadurch gekennzeichnet, daß sich jeder Spannzahn (26) aus einer kurzen Steilflanke (34) und einer langen Flachflanke (36) zusammensetzt.

4. Schnellbefestigungsvorrichtung nach einem der vorherigen Ansprüche, dadurch gekennzeichnet, daß die Steigung der langen Flachflanke (36) zwischen 7% und 35%, vorzugsweise 18% beträgt.

5. Schnellbefestigungsvorrichtung nach einem der vorherigen Ansprüche, dadurch gekennzeichnet, daß die Steigung der Flachflanke (36) der Spannzähne (26) des Auflagers (18) gleich der Steigung der Flachflanken (36) der Spannzähne (26) des Gegenlagers (22) ist.

6. Schnellbefestigungsvorrichtung nach einem der vorherigen Ansprüche, dadurch gekennzeichnet, daß an der langen Flachflanke (36) jedes Spannzahnes (26) mehrere Rastvorsprünge (38) angeformt sind.

7. Schnellbefestigungsvorrichtung nach einem der vorherigen Ansprüche, dadurch gekennzeichnet, daß im Auflager (18) und im Gegenlager (22) vorzugsweise je drei Spannzähne (26) gleichmäßig über dem Umfang angeordnet sind.

8. Schnellbefestigungsvorrichtung nach einem der vorherigen Ansprüche, dadurch gekennzeichnet, daß das Auflager (18) derart am Verschlußelementkopf (16) und das Gegenlager (20) derart an einem Befestigungsrahmen (12) angeordnet ist, daß sich beide Lager im montierten Zustand in gegenseitigem Eingriff befinden.

9. Schnellbefestigungsvorrichtung nach einem der vorherigen Ansprüche, dadurch gekennzeichnet, daß die Eingriffszähne (30) mit einer gewindeähnlichen Steigung angeordnet sind.

## Claims

1. Quick-connection device, in particular for plumbing accessories having an elongated lock element (14) comprising a spacer bolt (20) at one end and a lock element head (16) at the other end, with a locking device, wherein the locking device has, in addition to the spacer bolt (20), a retention element (24) having an opening (46) for acceptance of the spacer bolt (20), with a plurality of engagement teeth (30) formed on the surface of the spacer bolt (20), wherein the engagement teeth (30) are disposed in two opposite teeth sections (28, 29) about the girth of the spacer bolt (20), with opposing teeth (48) disposed in the opening (46) and having a position, shape and size corresponding to that of the engagement teeth (30), as well as with a lock element head (16) projecting at least at one location in the radial direction clearly beyond the spacer bolt (20),
characterized by a tightening device disposed on the lock element head (16).

2. Quick-connection device according to claim 1,
characterized in that the tightening device comprises a bearing (18) and an opposing bearing (22), wherein at least two tensioning teeth (26) are formed in both the bearing (18) as well as in the opposing bearing (22).

3. Quick-connection device according to one of the claims 1 or 2, characterized in that each tensioning tooth (26) comprises a short, steep side (34) and a long, flat side (36).

4. Quick-connection device according to one of the preceding claims, characterized in that the pitch of the long, flat side (36) assumes a value between 7% and 35%, preferentially 18%.

5. Quick-connection device according to one of the preceding claims, characterized in that the pitch of the flat side (36) of the bearing (18) tensioning teeth (26) is equal to the pitch of the flat side (36) of the opposing bearing (22) tensioning teeth (36).

6. Quick-connection device according to one of the preceding claims, characterized in that a plurality of snap protrusions (38) are formed on the long, flat side (36) of each tensioning tooth (26).

7. Quick-connection device according to one of the preceding claims, characterized in that preferentially three tensioning teeth (26) are equally distributed about the girth of both the bearing (18) and the opposing bearing (22).

8. Quick-connection device according to one of the preceding claims, characterized in that the bearing (18) is disposed on the lock element head (16) and the opposing bearing (20) is disposed on the mounting frame (12) in such a manner that both bearings are in mutual interlocking engagement in the mounted state.

9. Quick-connection device according to one of the preceding claims, characterized in that the engagement teeth (30) have a thread-like pitch.

## Revendications

1. Dispositif de fixation rapide, en particulier pour des objets d'équipement sanitaire, comportant un élément de fermeture (14) oblong qui présente à une extrémité un boulon écarteur (20) et à l'autre extrémité une tête d'élément de fermeture (16), comportant un dispositif d'arrêt qui présente en supplément au boulon écarteur (20) un élément de retenue (24) avec une ouverture (46) pour recevoir le boulon écarteur (20), comportant un certain nombre de dents d'engagement (30) formées sur la surface du boulon écarteur (20), les dents d'engagement (30) étant agencées à la périphérie du boulon écarteur (20) dans deux secteurs dentés (28, 29) opposés l'un à l'autre, comportant des contre-dents (48) qui sont agencées dans l'ouverture (46) et qui correspondent aux dents d'engagement (30) quant à la position, la forme et la taille, et comportant une tête d'élément de fermeture (16) qui dépasse à au moins un emplacement en direction radiale nettement au-delà du boulon écarteur (20), caractérisé par un dispositif de serrage agencé sur la tête (16).

2. Dispositif de fixation rapide selon la revendication 1, caractérisé en ce que le dispositif de serrage comporte un appui (18) et un contre-appui (22), au moins deux dents de serrage (26) respectives étant réalisées dans l'appui (18) et dans le contre-appui (22).

3. Dispositif de fixation rapide selon l'une ou l'autre des revendications 1 et 2, caractérisé en ce que chaque dent de serrage (26) se compose d'un flanc court en pente raide (34) et d'un flanc long en pente douce (36).

4. Dispositif de fixation rapide selon l'une quelconque des revendications précédentes, caractérisé en ce que la pente du flanc long en pente douce (36) est comprise entre 7 % et 35 %, de préférence de 18 %.

5. Dispositif de fixation rapide selon l'une quelconque des revendications précédentes, caractérisé en ce que la pente du flanc en pente douce (36) des dents de serrage (26) de l'appui (18) est égale à la pente des flancs en pente douce (36) des dents de serrage (26) du contre-appui (22).

6. Dispositif de fixation rapide selon l'une quelconque des revendications précédentes, caractérisé en ce que plusieurs saillies d'enclenchement (38) sont formées sur le flanc long en pente douce (36) de chaque dent de serrage (26).

7. Dispositif de fixation rapide selon l'une quelconque des revendications précédentes, caractérisé en ce que de préférence trois dents de serrage respectives (26) sont agencées en répartition régulière sur la périphérie dans l'appui (18) et dans le contre-appui (22).

8. Dispositif de fixation rapide selon l'une quelconque des revendications précédentes, caractérisé en ce que l'appui (18) est agencé de telle sorte sur la tête (16) et le contre-appui (20) est agencé de telle sorte sur un cadre de fixation (12), que les deux appuis se trouvent en engagement mutuel à l'état monté.

9. Dispositif de fixation rapide selon l'une quelconque des revendications précédentes, caractérisé en ce que les dents d'engagement (30) sont agencées sous une pente similaire à un pas de vis.
